(19) Europäisches Patentamt
European Patent Office
Office européen des brevets

(11) Veröffentlichungsnummer: **0 512 264 A2**

(12) **EUROPÄISCHE PATENTANMELDUNG**

(21) Anmeldenummer: **92105949.9**

(22) Anmeldetag: **07.04.92**

(51) Int. Cl.5: **B60B 39/02**, B60K 28/16

(30) Priorität: **10.05.91 DE 4115367**

(43) Veröffentlichungstag der Anmeldung: **11.11.92 Patentblatt 92/46**

(84) Benannte Vertragsstaaten: **DE ES FR GB IT SE**

(71) Anmelder: **Messerschmitt-Bölkow-Blohm Gesellschaft mit beschränkter Haftung**
**Robert-Koch-Strasse**
**W-8012 Ottobrunn(DE)**

(72) Erfinder: **Bodier, Rüdiger**
**Obere Dorfstrasse 5A**
**W-8011 Aying(DE)**
Erfinder: **Schmidt, Hartmut, Dr.**
**Lerchenweg 15**
**W-8067 Petershausen(DE)**

(54) **Antiaquaplaningsystem für ein Kraftfahrzeug.**

(57) Die Erfindung betriift ein Fahrzeug mit einem Antiaquaplaningsystem, insbesondere zur Verbesserung der Radhaftung trotz Wasserfläche auf der Fahrbahn.

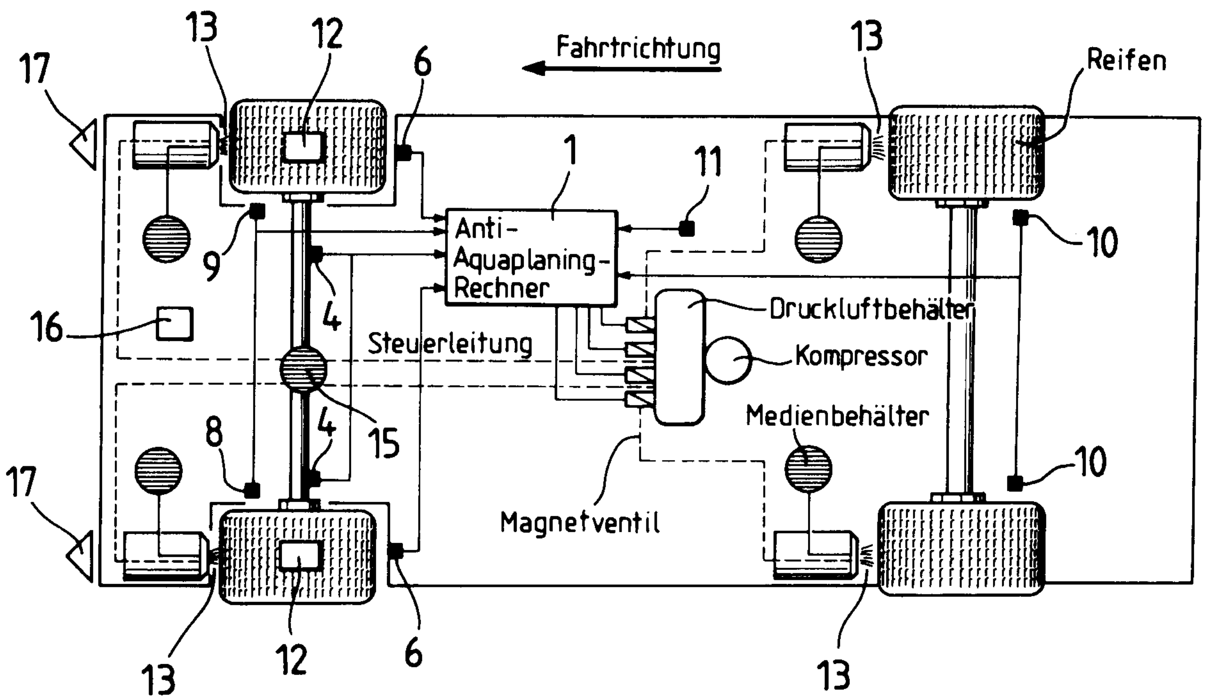


FIG. 1

EP 0 512 264 A2

Die Erfindung betrifft ein Antiaquaplaningsystem für ein Kraftfahrzeug mit einer elektronischen Erkennung des Aquaplaningeffektes, wie Aufschwimmen der Reifen des Kraftfahrzeuges auf Wasserflächen, auf Straßen, in Folge fehlenden Fahrbahnkontaktes (Schlupf).

Es sind bereits sogenannte Antischlupfregelungen ASR bekannt (siehe DE-OS 37 40 433 A1), die einen je nach Fahrbahnbeschaffenheit wirksamen Kraftschlußbeiwert ermittelt und in Abhängigkeit dazu jeweils eine maßgebliche Schlupfschwelle bestimmen.

Vorrichtungen zur Beseitigung des Aquaplaningeffektes, hervorgerufen durch Wasserlachen auf der Fahrbahn, z.B. zum Zerteilen des Wasserfilmes mittels eines vor dem Reifen ankommenden Gasstrahles sind der DE-OS 22 39 022 A1, der DE-OS 26 00 787 A1 und der DE-OS 34 17 048 A1 zu entnehmen. Insbesondere wird dort mit einem Druckluftstrahl gearbeitet.

Durch die japanische Patentschrift JP 1-226 403 (A) in: Patents Abstracts of Japan, Section M, Vol. 13 (1989), Hr. 552 (M-903) ist eine Einrichtung zur Verbesserung der Radhaftung bekannt, bei der reibungserhöhende Mittel zur besseren Radhaftung vor die Räder des Fahrzeuges von einem Rechner zeitlich gesteuert abgegeben werden, und die Feststellung eines Gleitens durch intelligente Verknüpfung von Sensorsignalen mittels eines Sensors zur Erfassung der Raddrehzahl um den Schlupf der Räder zu erkennen und weiteren Sensoren (z.B. für Fahrgeschwindigkeit, Bremsbetätigung, Motordrehzahl) erfolgt, sowie mit elektronischen Mitteln zur Signalanalyse und Auswertung der von den einzelnen Sensoren an die Auswerteeinrichtung des Rechners gelieferten und dort verarbeiteten Signale.

Moderne Straßenfahrzeuge, insbesondere Personenkraftwagen weisen heute an Bord eingebaut auf:

- einen Rechner,
- eine Bordelektronik mit eigener Stromversorgung,
- eine Hydraulik und Mittel zur Steuerung derselben, insbesondere mit Hilfe der Elektronik,
- ein Antiblockiersystem,
- ein Antischlupfregler, wobei beide letztgenannten Regeleinrichtungen wenigstens einen vorzugsweise mehrere Sensoren zur Erfassung von Raddrehzahlen umfassen.

Wenigstens ein Temperatursensor ist zur Erfassung der Umgebungstemperatur eingebaut, sei es für die Zwecke der Motor/Brennstoffregelung oder für Zwecke der Klimaregelung im Innenraum des Fahrzeuges.

Zusätzlich enthält das der Erfindung zugrundeliegende System noch die an sich bekannte Einrichtung, einen Massestrahl vor die Räder des Fahrzeuges zu richten.

Der Erfindung liegt die Aufgabe zugrunde, allgemein Unfallgefahren zu verringern und im besonderen ein Antiaquaplaningsystem zu schaffen, welches in der Lage ist, den vorbeschriebenen Aquaplaningeffekt mit Hilfe elektronischer Erkennungsmittel auf intelligente Weise sicher zu erfassen, zu erkennen und Maßnahmen seiner Bekämpfung und Beseitung einzuleiten.

Gelöst wird diese Aufgabe durch die in Anspruch 1 angegebenen Mittel und deren Verknüpfung. In weiteren Ansprüchen, der Beschreibung und Zeichnung von Ausführungsbeispielen sind weitere Merkmale der Erfindung angegeben. Zur Erfindung gehören auch die Kombination der angegebenen Merkmale miteinander sowie Abwandlungen der Ausführungsbeispiele.

Die wesentlichsten Vorteile der Erfindung sind: Während bei dem derzeitigen Antiblockiersystem ABS und Antischlupfregelsystem lediglich die Raddrehzahl als Hauptsignal ausgewertet wird, verknüpft die Erfindung die Werte verschiedener Sensoren und erkennt so eindeutig, ob Aquaplaninggefahr, d.h. Aufschwimmen der Reifen über Wasserflächen vorliegt und löst eine Warnung oder eine Gegenmaßnahme zum Zerteilen der Wasserschicht aus.

Das erfindungsgemäße Straßenfahrzeug weist Meßeinrichtungen zum Schwingungsverhalten des Fahrwerkes auf. Dabei handelt es sich mit Vorteil um akustische Sensoren, vorzugsweise an einer Achse (Vorderachse) angebracht und helfen z.B. über einen Frequenzanalysator schnell den Unterschied zwischen dem Schwingungsverhalten bei trockener Straße und bei Aquaplaning zu erkennen.

Des weiteren weist das erfindungsgemäße Straßenfahrzeug einen akustischen Sensor für das Schwingungsverhalten der Karosserie auf und es wird hiermit das Aufspritzen von Wasser von der nassen Fahrbahn detektiert.

Über die Raddrehzahlsensoren des Fahrzeuges wird der Schlupf der Räder bei nasser Fahrbahn erkannt. Dies führt insbesondere beim Bremsen während Auftreten eines Aquaplaningeffektes zu einer schnellen Erkennung der gefährlichen Situation, da in diesem Fahrzustand der geringe Reibungskoeffizient eine sofortige Verringerung der Drehzahl der aufschwimmenden Räder zur Folge hat. Beim Beschleunigen ist der dann umgekehrte Schlupf ein Maß für die Gefahrensituation. Beim ausrollenden Fahrzeug wird ein Aquaplaningeffekt ebenfalls über den Schlupf erkannt, da die aufschwimmenden Räder ebenfalls abgebremst werden.

Aufschwimmende Fahrzeugreifen an den Rädern zeichnen sich dadurch aus, daß sich die Wölbung des Reifens an der Aufstandsfläche des Rades in typischer Weise ändert. Auch hierdurch ist das Auftreten eines Aquaplaningeffektes erkennbar.

Einer Abgrenzung gegenüber Eisflächen kann mit Hilfe eines Temperatursensors erfolgen, der die Temperatur der Fahrzeugumgebung mißt und dadurch sicher erkennt, ob Aquaplaning überhaupt auftreten kann, denn unterhalb einer gewissen Temperatur (z.B. unter 0° C) tritt dieser Effekt nicht auf.

Die erfindungsgemäßen Maßnahmen werden nicht - zumindest nicht primär - zum Schutz bei Eisglätte ergriffen. Hierfür haben die Erfinder andere Mittel und Maßnahmen vorgeschlagen.

Durch die Verknüpfung der von den Sensoren erfaßten Meßwerte in einem Rechner an Bord des Fahrzeuges und der Auswertung durch Vergleich mit gespeicherten Schwingungskurven wird eindeutig das Auftreten eines Aquaplaningeffektes erkannt. Dabei sind hierzu wenigstens die Meßinformationen der Sensoren nach Anspruch 1 zu verwerten. Darüber hinaus können weitere Meßinformationen von Vorteil sein. Mit dem Ausgabesignal des Rechners "Aquaplaning liegt vor", ja oder nein, oder "liegt innerhalb ei- nes Bereiches mit vorgegebenen Schwellen" kann ein Warnsignal oder eine Gegenmaßnahme aktiviert werden:

- Durch einen Massestrahl aus Gas, Flüssigkeit oder Partikeln wird die Wasserschicht vor den Reifen zerstört.
- Durch Ausschalten der Lenkhilfe/Servolenkung wird das gefährliche Einschlagen der Räder weitgehend vermieden.
- Durch die Drosselung der Kraftstoffzufuhr wird eine moderate Fahrzeugverzögerung und damit eine Verringerung des Gefahrenpotentials eingeleitet.
- Durch mechanische Einrichtungen wird die Wasserschicht verdrängt.

Auch eine parallele Aktivierung verschiedener oben beschriebener Gegenmaßnahmen kann sinnvoll sein.

Nachstehend ist die Erfindung anhand der Zeichnung näher erläutert. Darin zeigen:

Fig. 1 Prinzipskizze eines Straßenfahrzeuges mit einem Anti-Aquaplaning-System,

Fig. 2 Logik-Schema,

Fig. 3 Kennfeld.

Wie aus Fig. 1 ersichtlich, ist in dem Kraftfahrzeug in Unteransicht dargestellt, daß jedem Rad wenigstens ein Sensor für die Raddrehzahl in Umdrehung pro Minute 8 bis 10 zugeordnet, um den Schlupf der Räder zu erkennen. Die elektronische Erkennung erfolgt mittels eines Rechners 1 und anhand des in Fig. 3 dargestellten Kennfeldes 2 und zur Beseitigung oder wenigstens Aufteilung einer Wasserschicht 3 vor den Rädern, welche den Aquaplaningeffekt hervorruft.

Zur Erkennung des Schwingungsverhaltens des Fahrwerkes sind akustische Sensoren 4 mit einer Einrichtung zur Signalanalyse dieses Sensors als Teil des Antiaquaplaningsystems dem Rechner 1 zugeordnet.

Die Mittel zur Erkennung des Schwingungsverhaltens der Karosserie sind ebenfalls akustische Sensoren 6, z.B. piezoelektrische Elemente wie Schwingquarze und sind mit einer Einrichtung 7 zur Signalanalyse dieses Sensors 6 verbunden, um so etwa Aufspritzen des Wassers zu detektieren. Mit 8, 9 und 10 sind die Drehzahlsensoren und mit 11 der Temperatursensor bezeichnet, der z.B. im Bereich der vorderen Stoßstange eingebaut ist. Mit 12 ist ein Sensor bezeichnet, der zur Erkennung der Radwölbung einer Aufstandsfläche der Reifen vorgesehen ist. Dies kann ein optischer Sensor, z.B. ein Lasersensor, ein Radarmeßsystem oder ein Ultraschallmeßsystem oder dgl. sein.

Die Meßwerte werden von den Sensoren zu ihren Signalverarbeitungseinrichtungen geführt, die ihrerseits mit dem Rechner verbunden sind um dort eine Analyse, z.B. einer Frequenzanalyse aber auch eine Amplituden- oder Phasenanalyse oder ähnliches durchzuführen um in an sich bekannter Weise einen Vergleich mit in einem Speicher des Rechners abgespeicherten Kurvenverläufen vorzunehmen und dann die oben angeführte Ja/Nein-Aussage treffen zu können anhand der Bewertung in einem Kennfeld 2 wie in Fig. 3 dargestellt. Dort ist der Aquaplaningbereich klar definiert nach Schwellwerten. Auf der Y-Achse sind Frequenz und Schwingungen an der Karosserie aufgetragen, auf der X-Achse die Schwingungen am Fahrwerk und in der Z-Achse die Temperatur.

Nach der Auswertung und Abgabe des Ausgangssignales wird mit bestimmten Mitteln bei 3 die Wasserschicht angegriffen, welche den Aquaplaningeffekt hervorgerufen hat. Spritzwasser führt nur dann zur Anregung des akustischen Sensors an der Karosserie, wenn die Schwingungsanregung in dem in Fig. 3 gezeigten Bereich liegt (Aquaplaningbereich). Dieser kann rechnerisch oder empirisch festgelegt werden.

Auf der X-Achse werden Schwingungen am Fahrwerk mit einem weiteren akustischen Sensor erfaßt, hervorgerufen durch das Aufschwimmen der Räder, die zu Schwingungen der Achse führen und dann auf den Sensor 4, der der Mitte oder Achse zugeordnet ist (siehe Fig. 1), wirken.

Die Meßwerte aufgetragen auf der Z-Achse im Kennfeld der Fig. 3 sind von dem Temperatursensor erfaßt und werden in der Analyse bzw. Auswertung im Rechner 1 nur herangezogen, wenn die Temperatur in einem Bereich liegt, in dem Regen möglich ist - im Gegensatz zur Möglichkeit der Eis- oder Schneebildung - d.h. im dargestellten Beispiel der Fig. 3 etwa ± 4° C.

Die Mittel zur Zerteilung oder Zerstörung der Wasserschicht 3 sind schematisch in Fig. 2 und ihrer Anordnung nach in Fig. 1 ersichtlich. Es handelt sich dabei um eine Einrichtung, die einen Massestrahl erzeugt, welcher die Wasserschicht mechanisch durch Verdrängung beseitigt. Der Massestrahl aus einem Reservoir in an sich bekannter Weise zeitgesteuert, pneumatisch, hydraulisch, elektrisch, kann bestehen aus einem Gasstrahl, einem Flüssigkeitsstrahl oder einem Partikelstrahl vor die Räder gerichtet, z.B. aus Düsen 13 anstehend, wenn der Rechner nach Auswertung des Kennfeldes 2 ein Ausgabesignal abgegeben hat und dieses einem "Ja" (Aquaplaning liegt vor) entspricht. Dann kann mit Hilfe einer Einrichtung 14 vorzugsweise elektronischer Art die Lenkhilfe oder Servolenkung 15 abgeschaltet werden. Dieses kann z.B. mit Hilfe eines elektromagnetischen Ventiles geschehen, welches den Druck des Lenkgetriebes reduziert. Somit kann ein gefährliches "Verreißen" der Lenkung bei Auftreten des Aquaplaningeffektes vermieden werden.

Eine Einrichtung 16 unterbricht die Kraftstoffzufuhr zum Motor oder drosselt sie im Falle des Auftretens eines Aquaplaningeffektes, um ein sanftes Abbremsen des Fahrzeuges zu gewährleisten. Dies kann ebenfalls mit Hilfe eines elektromagnetischen Ventiles, geschehen, wie bei Fahrzeugen mit An- tischlupfregelungen oder Antiblockiersystemen (in der Hydraulik) üblich. Mit 17 wird eine Einrichtung bezeichnet, welche die Wasserschicht mechanisch verdrängt, dabei kann es sich um elastische, z.B. aus Gummi beste- hende Abweiser im vorderen Stoßstangenbereich des Fahrzeuges handeln, welche entgegen der Fahrtrichtung auslenkbar an den Stoßstangen vor den Rädern angeordnet sind.

Für den Fachmann sind Abhandlungen der vorstehend in den Ausführungsbeispielen angegebenen Mittel und ihrer Verwendung möglich.

Weitere Maßnahmen als die Abgabe eines Massestrahles können ergriffen werden, wie z.B. das Zuschalten von Antischleuder- oder Antirutschmitteln. Auch andere Mittel zur Verbesserung der Fahrsituation, insbesondere zur Verhinderung des Schleuderns sind anwendbar, ebenso wie weitere Sensoren, insbesondere zum Erfassen einer Geschwindigkeit, einer Beschleunigung oder einer Änderung dieser Parameter. Gleiches gilt für die Erfassung des Druckes oder von Änderungen desselben in dem verwendeten Hydrauliksystem sowie die Verwendung bekannter Mittel um den Kraftschluß des Rades, insbesondere den Beiwert hierfür, in Relation zur Fahrbahn und deren Zustand zu bestimmen, gleiches gilt für die Reifenkennlinie und deren ggf. vorliegende Änderung mit im Rechner gespeicherten Kennlinien.

## Patentansprüche

1. Antiaquaplaningsystem für ein Kraftfahrzeug, insbesondere zur Verbesserung der Radhaftung trotz Wasserlachen auf der Fahrbahn, wobei Mittel zur besseren Radhaftung vor die Räder des Fahrzeuges von einem Rechner zeitlich gesteuert abgegeben werden, welche die Wasserschicht mechanisch verdrängen, und die Mittel einen Massestrahl aus Gas oder Flüssigkeit oder Partikel oder einer Mischung von wenigstens zwei dieser Mittel bilden und elektronische Mittel zur Signalanalyse und Auswertung der von einzelnen Sensoren an die Auswerteeinrichtung des Rechners gelieferten und verarbeiteten Signale, **gekennzeichnet** durch die intelligente Verknüpfung der Sensorsignale zur Erkennung des Aquaplaningeffektes mittels
   a) eines Temperatursensors zur Erfassung der Umgebungstemperatur des Fahrzeuges,
   b) eines Sensors zur Erfassung des Schwingungsverhaltens des Fahrwerkes,
   c) eines Sensors zur Erfassung des Schwingungsverhaltens wenigstens eines Karosserieteiles, das durch von der Fahrbahn aufspritzendes Wasser beeinflußbar ist,
   d) eines an sich bekannten Sensors zur Erfassung der Raddrehzahl um den Schlupf der Räder zu erkennen.

2. Antiaquaplaningsystem nach Anspruch 1, **dadurch gekennzeichnet,** daß der Rechner nach Vergleich mit vorgegebenen Daten und Erkennung dessen ob die Signale im Aquaplaningbereich eines Kennfeldes liegen, eine optische oder akustische Warnung für den Fahrer des Fahrrzeuges auslöst oder Maßnahmen zur Dämpfung oder Beseitigung des Aquaplaningeffektes einleitet.

3. Antiaquaplaningsystem nach einem der vorhergehenden Ansprüche, **dadurch gekennzeichnet,** daß das Antiaquaplaningsystem nicht nur Maßnahmen zur Beseitigung des Aquaplaningeffektes einleitet sondern auch ein gesteuertes Abbremsen, insbesondere durch Drosselung der Kraftstoffzufuhr der Antriebsmaschine.

4. Antiaquaplaningsystem nach einem der vorhergehenden Ansprüche, **dadurch gekennzeichnet,** daß das Antiaquaplaningsystem zugleich mit der Einleitung der Maßnahmen zur Beseitigung des Aquaplaningeffektes die Lenkhilfe oder Servolenkung abschaltet.

5. Antiaquaplaningsystem nach einem der vorhergehenden Ansprüche, **dadurch gekennzeichnet,** daß der Sensor, der das an wenigstens einem Karosserieteil aufspritzende Wasser detektieren soll, als akustischer Sensor ausgebildet ist.

6. Antiaquaplaningsystem nach einem der vorhergehenden Ansprüche, **dadurch gekennzeichnet,** daß der Sensor zur elektronischen Erkennung des Schwingungsverhaltens des Fahrwerkes ausgebildet ist, mit Mitteln zum Erfassen des Aufschwimmen des Reifens bei Aquaplaning.

7. Antiaquaplaningsystem nach Anspruch 6, **dadurch gekennzeichnet,** daß die Mittel als Akustiksensor ausgebildet sind, der einer Achse des Fahrzeuges zugeordnet sind und mit einem Frequenzanalysator verbunden ist.

8. Antiaquaplaningsystem nach Anspruch 6, **dadurch gekennzeichnet,** daß die Mittel aus einem optischen Sensor, z.B. einem Lasersensor bestehen, zur Erkennung der Radwölbung an der Aufstandsfläche eines Reifens.

9. Antiaquaplaningsystem nach einem der vorhergehenden Ansprüche, **dadurch gekennzeichnet,** daß der Frequenzanalysator zur Bewertung des Schwingungsverhaltens auch zur Erfassung von Amplituden- und Phasenänderungen über jeweils eine vorgegebene Zeitdauer ausgebildet ist.

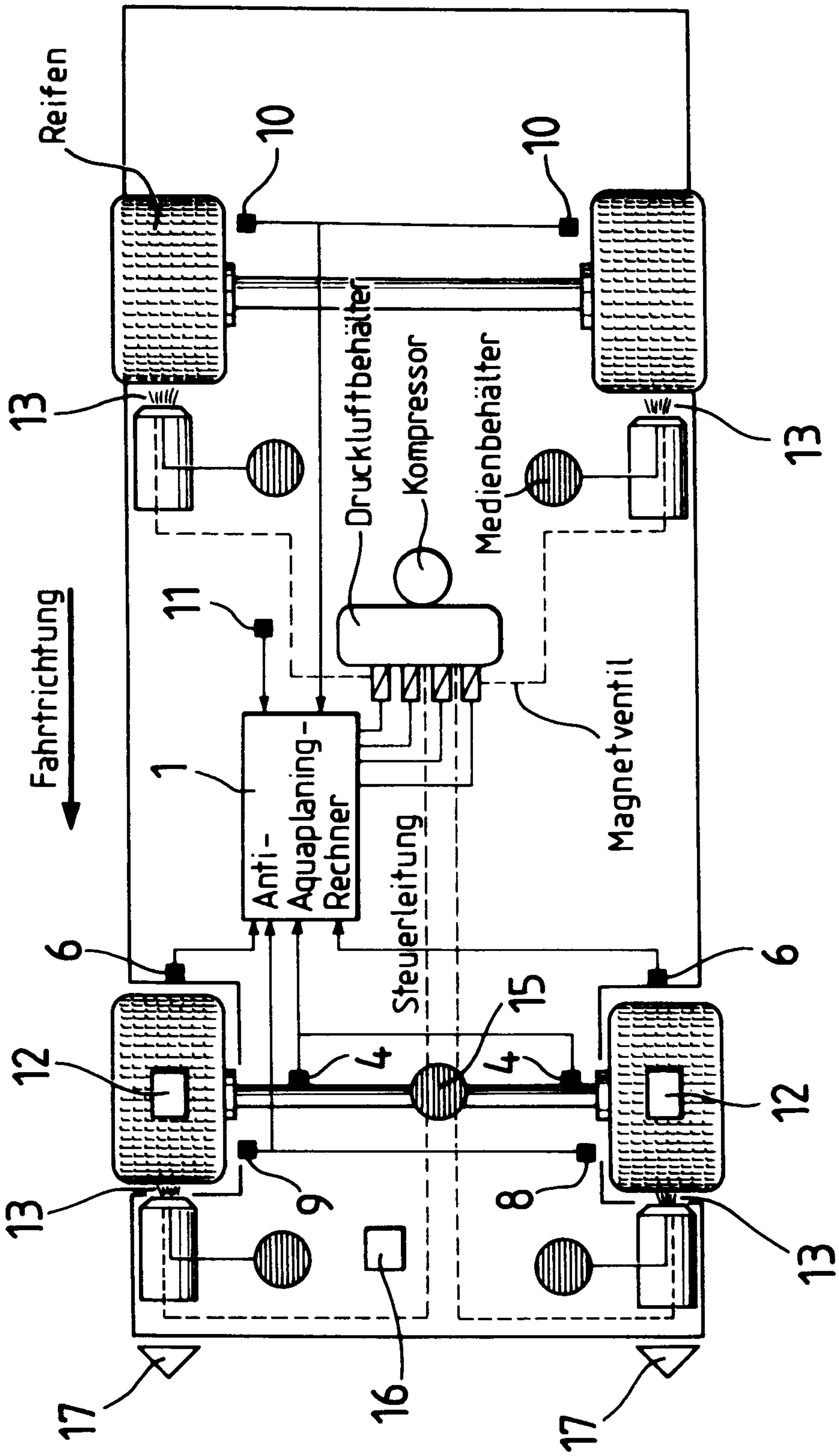
Reifen
10
10
13
13
Druckluftbehälter
Kompressor
Medienbehälter
Fahrtrichtung
11
1
Anti-
Aquaplaning-
Rechner
Magnetventil
Steuerleitung
6
6
12
12
15
4
4
13
13
9
8
16
17
17

FIG. 1

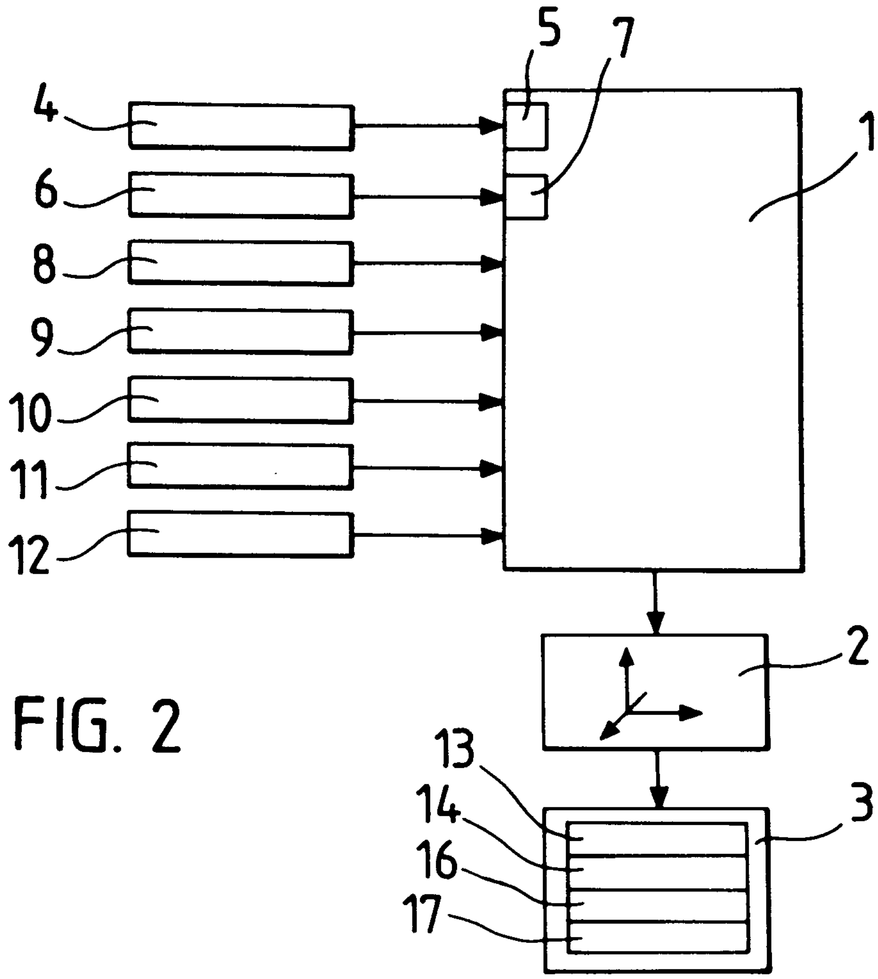
5
7
4
1
6
8
9
10
11
12
2
13
14
3
16
17

FIG. 2

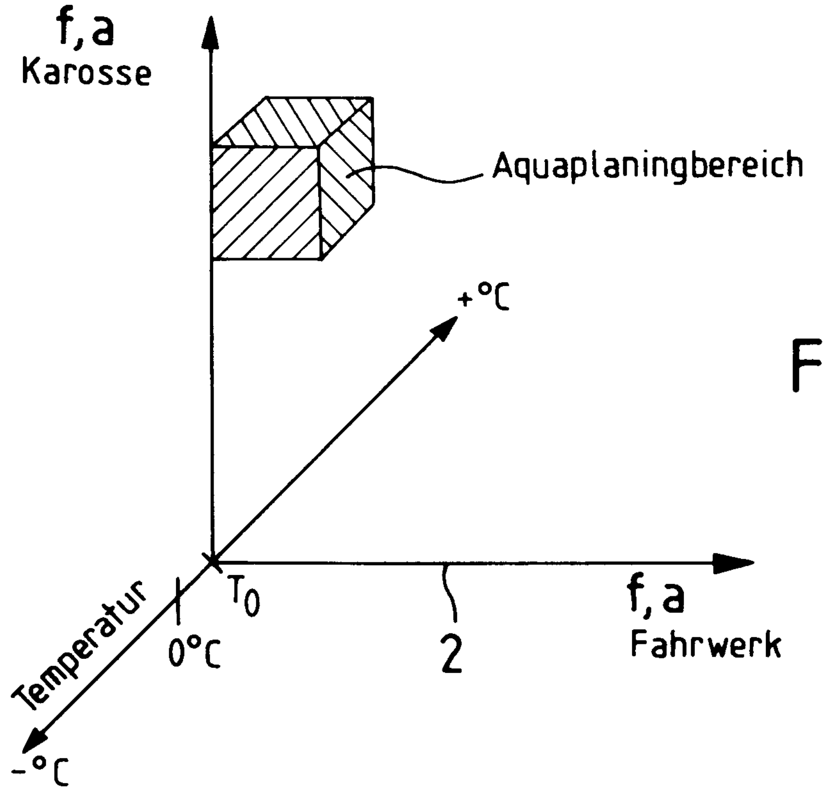
f,a
Karosse
Aquaplaningbereich
+°C
T0
f,a
Fahrwerk
Temperatur
0°C
2
-°C

FIG. 3